# EUROPEAN PATENT SPECIFICATION

(11) **EP 1 529 016 B1**
(45) Date of publication and mention of the grant of the patent: **02.08.2006**
(21) Application number: 03710245.6
(22) Date of filing: 05.03.2003
(51) Int. Cl.: C01G 49/06, C01G 49/08, C01G 51/00, G11B 5/706, G11B 5/738

(54) **IRON OXIDE POWDER AND A PROCESS OF PRODUCING THE SAME**
EISENOXIDPULVER UND VERFAHREN ZU DESSEN HERSTELLUNG
POUDRE D'OXYDE DE FER ET PROCEDE DE PRODUCTION DE CETTE POUDRE

(30) Priority: 23.08.2002 JP 2002243345
(43) Date of publication of application: 11.05.2005
(73) Proprietor: Kanto Denka Kogyo CO., LTD., Chiyoda-ku, Tokyo 100-0005 (JP)
(72) Inventor: NAGATSUKA, Tamio, c/o KANTO DENKA KOGYO CO., LTD, Shibukawa-shi, Gunma 377-0027 (JP); IIZUKA, Shinji, c/o KANTO DENKA KOGYO CO., LTD, Shibukawa-shi, Gunma 377-0027 (JP); SAITO, Takashi, c/o KANTO DENKA KOGYO CO., LTD, Shibukawa-shi, Gunma 377-0027 (JP); MORIYA, Yosimi, c/o KANTO DENKA KOGYO CO., LTD, Shibukawa-shi, Gunma 377-0027 (JP); HAYASHI, Masatomo, c/o KANTO DENKA KOGYO CO., LTD, Shibukawa-shi, Gunma 377-0027 (JP)
(74) Representative: Forstmeyer, Dietmar
(86) International application number: PCT/JP2003/002581
(87) International publication number: WO 2004/018364

(56) References cited:
- EP-A- 0 867 407
- EP-A- 1 164 581
- US-A- 4 755 315
- US-A- 4 822 509
- US-A- 5 599 378
- US-A- 5 989 516

## Description

### Technical Filed

This invention relates to a magnetic iron oxide powder containing cobalt which can be used to form an undercoat layer of a coat-type magnetic recording medium having a multilayer structure.

As the recording density of coat-type magnetic recording media increases (i.e., as the recording wavelength is shortened), a magnetic domain as the smallest unit of recording becomes smaller. With the resultant reduction of the magnetic domain size (length in the magnetization direction) to magnetic layer thickness ratio, a demagnetization field increases to increase the self-demagnetization loss. To solve this problem it is necessary to reduce the magnetic layer thickness with respect to the magnetic domains. However, a magnetic layer of 2 µm or thinner directly formed on a substrate is susceptible to the influences of the non-magnetic substrate, tending to suffer from deterioration of electromagnetic characteristics, dropouts, and the like. To address this problem, JP-A-5-182178 proposes a magnetic recording medium having a multilayer structure composed of a substrate, a non-magnetic undercoat layer comprising inorganic powder dispersed in a binder, and a magnetic layer comprising ferromagnetic powder dispersed in a binder and having a thickness of 1.0 µm or smaller which is formed on the undercoat layer while the undercoat layer is wet. Magnetic tapes composed of such a thin magnetic layer and such a non-magnetic undercoat layer have been put to practice use as DTL IV or DDS-4 format tapes for high-density high-capacity computer systems. Nevertheless the demands for magnetic recording media such as discs and tapes with further increased capacity and density have been still growing without bounds, requiring further improvements on performance characteristics.

In the coat-type magnetic recording media having the multilayer structure, the surface smoothness of the undercoat layer is an important requirement. JP-A-9-170003, JP-A-10-198948, and JP-A-10-273325 report attempts to improve dispersibility of iron oxide powder for the undercoat layer. However, an iron oxide powder which has enough dispersibility to form an undercoat layer with a smooth surface has not been available as yet.

A tape end detection system utilizing transmitted light is currently adopted for implementing auto-shutoff or autoreverse at the end of tape. This system detects a difference in transmitted light intensity between an area coated with both the upper magnetic layer and the lower undercoat layer and a non-coated area. However, the particles constituting the coated area are smaller in size than optical wavelengths and transparent to show an extremely small difference in light transmittance from the non-coated area, resulting in a failure of tape end detection. Besides, because such fine particles are electrically insulating, a tape containing the same ought to have a high resistance and will be electrostatically charged by the friction with a head on running. Therefore, it has been necessary to add increased amounts of a low light transmittance material and a high conductivity material or a material having low light transmittance and high conductivity.

### Disclosure of the Invention

An object of the present invention is to provide a magnetic iron oxide powder for forming an undercoat layer of a coat-type magnetic recording medium having a multilayer structure which has excellent dispersibility, capability of forming a smooth undercoat layer, low light transmittance, and high electrical conductivity, and a process of producing the powder.

The above object is accomplished by an iron oxide powder for an undercoat layer of a coat-type magnetic recording medium having a multilayer structure which comprises cobalt-doped iron oxide particles having an average length of 0.02 to 0.3 µm, an aspect ratio (length to width ratio) of 2 to 13, and a BET specific surface area of 40 to 100 m²/g and containing a cobalt compound in an amount of 0.2 to 10 atom% in terms of cobalt based on total iron.

The above object is also accomplished by a process of producing iron oxide powder for an undercoat layer of a coat-type magnetic recording medium having a multilayer structure, which comprises the steps of synthesizing goethite, filtering the resulting goethite slurry, washing the filter cake with water, drying the cake, and firing the resulting goethite powder at 400 to 600°C, wherein an aqueous cobalt salt solution is added to the system of synthesizing goethite when 50 to 100% of iron (II) is oxidized to iron (III) in the step of synthesizing goethite, followed by continuation of the oxidation reaction to produce cobalt-doped iron oxide particles having an average length of 0.02 to 0.3 µm, an aspect ratio (length to width ratio) of 2 to 13, and a BET specific surface area of 40 to 100 m²/g and containing a cobalt compound in an amount of 0.2 to 10 atom% in terms of cobalt based on total iron.

### Best Mode for Carrying out the Invention

The iron oxide powder for undercoat layer according to the present invention comprises cobalt-doped iron oxide particles. The cobalt-doped iron oxide particles internally contain 0.2 to 10 atom%, preferably 0.5 to 8.5 atom%, in terms of cobalt, of a cobalt compound based on the total iron. The iron oxide powder of the present invention exhibits higher dispersibility than conventional non-magnetic iron oxide powders for undercoat layer by virtue of its cobalt content. With a cobalt content less than 0.2 atom% or more than 10 atom%, the powder fails to exhibit required optical absorption, namely, has a high light transmittance. The powder having high light transmittance gives only a small difference in transmitted light intensity between a coated area and a non-coated area in magnetic tapes, which makes tape end detection difficult.

The presence of 0.2 atom% or more of cobalt based on total iron makes the iron oxide powder highly conductive. With a cobalt content less than 0.2 atom%, the conductivity is low, which results in high electric resistance of magnetic recording medium, to fail to prevent the magnetic recording medium from being triboelectrically charged due to slide running on a head. As a result, the recording medium is apt to attract dust, etc., leading to increased dropouts.

The cobalt compound includes cobalt chloride, cobalt sulfate, and cobalt nitrate.

The cobalt-doped iron oxide particles have an average length of 0.02 to 0.3 µm, preferably 0.05 to 0.25 µm. Particles with an average particle length smaller than 0.02 µm are difficult to disperse in a vehicle due to the increased force of aggregation. Particles longer than 0.3 µm are too large to assure surface smoothness of the undercoat layer.

The cobalt-doped iron oxide particles are acicular particles having an aspect ratio (length to width ratio) of 2 to 13, preferably 4 to 11. If the aspect ratio is smaller than 2, the particles have reduced structural viscosity in a disperse system, which is generally attributed to the particle shape, and are difficult to harmonize with a magnetic coating used to form an upper magnetic layer. Further, particles having an aspect ratio smaller than 2 undergo little effect of compression in calendering after coating and drying for creating a mirror finish. If the aspect ratio exceeds 13, such elongated particles are easily entangled with each other or- broken when dispersed only to give a coating of poor particle size distribution.

The cobalt-doped iron oxide particles have a BET specific surface area of 40 to 100 m²/g, preferably 45 to 65 m²/g. Particles having a BET specific surface area less than 40 m²/g are so large as to spoil the surface smoothness of the undercoat layer. Particles with a BET specific surface area more than 100 m²/g are difficult to disperse in a vehicle, resulting in a failure to provide a smooth surface.

The cobalt-doped iron oxide powder is preferably cobalt-doped α-iron oxide powder. It is preferred for the cobalt-doped iron oxide powder to have a coercive force of 15 to 60 kA/m, particularly 20 to 50 kA/m, and a saturation magnetization of 0.2 to 5.0 Am²/kg, particularly 0.25 to 2.0 Am²/kg.

The iron oxide particles having a coercive force and a saturation magnetization in the above respective ranges are oriented when an undercoat layer is applied and oriented or when an undercoat layer and an upper magnetic layer are applied simultaneously, thereby assuring smoothness of the undercoat layer surface. Iron oxide particles having a coercive force less than 15 kA/m or a saturation magnetization less than 0.2 Am²/kg are hardly oriented as conventional non-magnetic iron oxide powders even where an undercoat layer is applied and oriented or where an undercoat layer and an upper magnetic layer are applied simultaneously, making no more contribution to undercoat layer surface smoothness. If the iron oxide particles have a coercive force greater than 60 kA/m or a saturation magnetization greater than 5.0 Am²/kg, an undercoat layer formed of such particles will participate in magnetic recording and accelerate self-demagnetization loss or cause noise.

The Co-doped iron oxide particles may contain salts of metals, e.g., nickel, iron and aluminum, for the purpose of controlling crystallinity, improving particle size distribution, increasing aspect ratio, improving shape retention on firing, preventing fusion between particles, and improving dispersibility.

The iron oxide powder for forming an undercoat layer which comprises the above-described cobalt-doped iron oxide powder can be produced by adding an aqueous cobalt salt solution to a goethite synthesis system in the course of oxidation (after 50 to 100% of iron (II) is oxidized to iron (III), preferably after 75% of iron (II) has been oxidized and by the time when 90% of iron (II) has been oxidized) to co-precipitate cobalt, followed by continuation of the oxidation reaction, and treating the resulting goethite slurry by filtration, washing with water, drying, and firing.

Goethite can be synthesized by neutralizing a ferrous salt aqueous solution which, if necessary, contains a ferric salt or other metal salts, e.g., a nickel salt and a zinc salt, by mixing with at least a stoichiometrically requisite amount of an alkali or an alkali carbonate and oxidizing the resulting ferrous hydroxide by bubbling an oxygen-containing gas (such as air) through the system.

The concentration of the aqueous ferrous salt solution is usually 0.02 to 2 mol/l, preferably 0.05 to 2 mol/l, still preferably 0.1 to 0.8 mol/l. In concentrations higher than 0.8 mol/l, stirring would be insufficient because of high viscosity so that the resulting dispersion tends to be non-uniform. Solutions in concentrations higher than 2 mol/l are difficult to stir. Solutions in concentrations lower than 0.02 mol/l are disadvantageous for industrial productivity.

The alkali to be added includes sodium hydroxide, potassium hydroxide, and ammonia. The alkali carbonate includes sodium carbonate, sodium hydrogencarbonate ammonium carbonate, and ammonium hydrogencarbonate.

The alkali is added in an equivalent or more amount, preferably in amounts up to five equivalents. From the standpoint of particle distribution and independence of individual particles, alkali carbonates are preferred. The alkali carbonate is added in an equimolar or more amount, preferably 1.5 to 3.0 equivalents, to iron. Use of more than 3 equivalents of an alkali carbonate, being expensive, results in an increased cost, which is industrially disadvantageous for performance. Other metal salts, such as nickel, zinc or aluminum salts, may be added for the purpose of controlling crystallinity, improving particle size distribution, increasing the aspect ratio, and the like.

The oxidation with an oxidizing gas, such as air or oxygen gas, is usually carried out at 20 to 90°C, preferably 30 to 70°C. Oxidation at temperatures higher than 70°C can result in formation of magnetite in addition to goethite. An advisable upper temperature limit is 90°C. Oxidation at temperatures lower than 30°C not only needs too much time, which is industrially inefficient, but can result in formation of plate-like products and amorphous (low-crystallinity) particles. An advisable lower temperature limit is 20°C.

An aqueous cobalt salt solution is added to the goethite synthesis system in the course of the oxidation reaction to co-precipitate cobalt. After the addition, the oxidation reaction is continued to obtain a cobalt-doped goethite slurry. The cobalt salt includes cobalt chloride, cobalt sulfate, and cobalt nitrate.

The resulting cobalt-doped goethite slurry is filtered, and the filter cake is washed with water, dried at 100 to 200°C for 8 to 20 hours, and fired at 400 to 600°C to obtain a black cobalt-doped iron oxide powder according to the invention.

When fired at temperatures higher than 600°C, the particles undergo deformation or agglomeration due to sintering between particles. Where the particles are fired at temperatures lower than 400°C, the resulting cobalt-doped iron oxide particles will have a large number of pores and a low degree of crystallinity. Such particles are brittle and easily broken when formulated into a coating composition. A preferred firing temperature is from 450 to 550°C, and a preferred firing time is 1 to 5 hours, particularly 2 to 3 hours.

For improving shape retention on firing, preventing agglomeration on firing, and improving dispersibility, the cobalt-doped iron oxide particles can be coated with an appropriate amount of aluminum, silica, etc. by co-precipitation or coating.

The present invention will now be illustrated in greater detail with reference to Examples in view of Comparative Examples, but it should be understood that the present invention is not construed as being limited thereto.

The characteristics of iron oxide powders for undercoat layer formation and of undercoat layers shown in Examples and Comparative Examples were measured as follows.

### 1) Shape of iron oxide particles

A transmission electron micrograph (x30000) taken of an iron oxide powder was enlarged four times, and the lengths of the major axis and the minor axis of arbitrarily selected 200 particles were measured to obtain respective averages.

### 2) BET specific surface area of iron oxide particles

Measured by the BET method with Tetrasorb 4-Sample Automatic Surface Area Analyzer 4SU2, supplied by Yuasa-Ironics Co., Ltd.

### 3) Magnetic characteristics of iron oxide powder

An iron oxide powder was lightly ground in a mortar, and its magnetic characteristics in a magnetic field of 10 kOe were measured with a vibrating-sample magnetometer (BHV-30, supplied from Riken Denshi Co., Ltd.).

### 4) Specific resistance of iron oxide powder

An iron oxide powder was press molded into a disc of 13 mm in diameter and 2 mm in thickness. The disc held in between a pair of electrodes, 1V voltage applied, and the resistivity was measured.

### 5) Viscosity of coating composition for undercoat layer

The viscosity of a coating composition prepared was measured at 25°C with a Haake Rotovisco viscometer (model RV-12) equipped with a rotor MV-DIN at 32 rpm.

### 6) Gloss of undercoat layer (dispersion stability of coating composition)

A 60° gloss of an undercoat layer was measured with Handy Glossmeter PG-1 available from Nippon Denshoku Industries Co., Ltd. Dispersion stability of a coating composition was evaluated by a change (%) from the gloss of an undercoat layer formed of a coating composition immediately after preparation.and that of an undercoat layer formed of the same coating composition after standing for 60 minutes from the preparation. A smaller change of gloss indicates higher dispersion stability of the coating composition.

### 7) Surface roughness Ra of undercoat layer

An average center-line roughness (Ra) of an undercoat layer was measured with Surfcom 575A.

### 8) Light transmittance of undercoat layer

Light transmittance of a dried coating film applied to a 25 µm thick polyester film were measured in the visible region and at 900 nm, using the uncoated polyester film as a blank.

### EXAMPLE 1

A reactor equipped with a stirrer and a gas introducing tube was purged with nitrogen gas to expel oxidizing gas. An alkali solution of 18 mol of sodium carbonate and 6 mol of sodium hydroxide in 401 of pure water was put into the reactor. A solution of 12 mol of ferrous chloride in 201 of pure water was mixed into the alkali solution to prepare a suspension. The suspension was kept at 50°C for 1 hour and then oxidized with 2.0 l/min of air for 2 hours. A solution of 0.6 mol of cobalt chloride in 5.01 of pure water was added to the reaction mixture, and the oxidation was continued to oxidize iron (II) to iron (III). The reaction mixture was filtered, and the filter cake was washed with water and dried in a dryer at 140°C for 10 hours to obtain about 1.1 kg of a cobalt-doped goethite cake. The cake was fired at 500°C for 2 hours in air to obtain about 1.0 kg of a cobalt-doped iron oxide powder.

### EXAMPLE 2

A cobalt-doped iron oxide powder was obtained in the same manner as in Example 1, except for changing the amount of cobalt chloride to 0.06 mol.

### EXAMPLE 3

A cobalt-doped iron oxide powder was obtained in the same manner as in Example 1, except for changing the amount of cobalt chloride to 0.12 mol.

### EXAMPLE 4

A cobalt-doped iron oxide powder was obtained in the same manner as in Example 1, except for changing the amount of cobalt chloride to 1.0 mol.

### EXAMPLE 5

A cobalt-doped iron oxide powder was obtained in the same manner as in Example 1, except for using a solution of 24 mol of ammonium carbonate in 401 of 1.8 mol/l aqueous ammonia as an alkali solution.

### EXAMPLE 6

A cobalt-doped iron oxide powder was obtained in the same manner as in Example 1, except for using a solution of 60 mol of sodium hydroxide in 401 of pure water as an alkali solution.

### COMPARATIVE EXAMPLE 1

An iron oxide powder was obtained in the same manner as in Example 1, except that an aqueous cobalt chloride solution was not added.

### COMPARATIVE EXAMPLE 2

An iron oxide powder was obtained in the same manner as in Example 5, except that an aqueous cobalt chloride solution was not added.

### COMPARATIVE EXAMPLE 3

An iron oxide powder was obtained in the same manner as in Example 6, except that an aqueous cobalt chloride solution was not added.

### COMPARATIVE EXAMPLE 4

A cobalt-doped iron oxide powder was obtained in the same manner as in Example 1, except for changing the amount of cobalt chloride to 2.0 mol.

The characteristics of the iron oxide powders (cobalt-doped or non-doped) prepared in Examples 1 to 6 and Comparative Examples 1 to 4 are shown in Table 1 below.

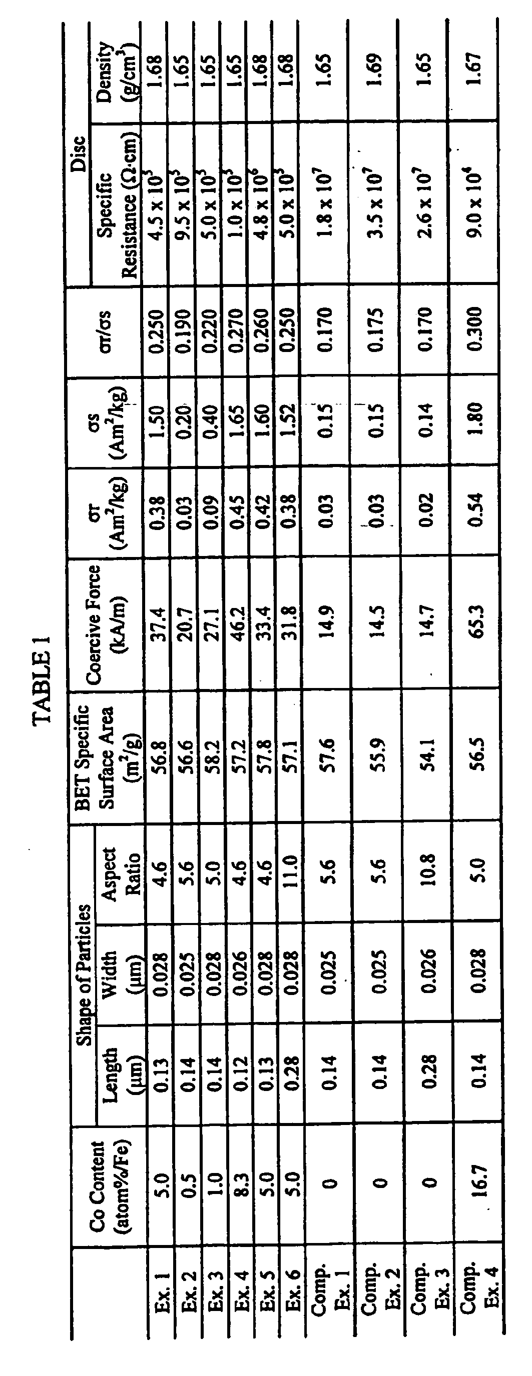

### EXAMPLES 7 TO 12 AND COMPARATIVE EXAMPLES 5 TO 8

Each of the iron oxide powders of Examples 1 to 6 and Comparative Examples 1 to 4 was compounded into a coating composition according to the formulation shown below. The resulting coating composition was applied to a polyester base film to form an undercoat layer. The characteristics of the undercoat layer are shown in Table 2.

### Undercoating layer formulation:

Iron oxide powder 100 parts (by weight, hereinafter the same)
Vinyl chloride-vinyl acetate copolymer (MR-110, available from Zeon Corp.) 15 parts
Urethane resin (UR-8200, available from Toyobo Co. Ltd.) 15 parts
Toluene 135 parts
Methyl ethyl ketone 135 parts
Cyclohexanone 120 parts

**TABLE 2**

| | Iron Oxide Powder | Co Content (atom%/Fe) | Coating Composition Viscosity (cP) | Coating Thickness (µm) | Ra (nm) | Gloss (%) | Dispersion Stability (Gloss Change) (%) | Light transmittance (%) | |
|---|---|---|---|---|---|---|---|---|---|
| | | | | | | | | Visible Light | 900 nm |
| Ex. 7 | Ex. 1 | 5.0 | 270 | 2.8 | 5.8 | 250 | 0.5 | 1.1 | 5.8 |
| Ex.8 | Ex. 2 | 0.5 | 258 | 2.8 | 12.8 | 160 | 5.7 | 16.2 | 42.8 |
| Ex. 9 | Ex. 3 | 1.0 | 294 | 2.8 | 6.3 | 220 | 2.6 | 3.8 | 15.0 |
| Ex.10 | Ex. 4 | 8.3 | 252 | 2.8 | 5.9 | 170 | 8.8 | 17.5 | 39.9 |
| Ex.11 | Ex. 5 | 5.0 | 300 | 2.8 | 5.1 | 220 | 0.7 | 4.5 | 15.0 |
| Ex. 12 | Ex. 6 | 5.0 | 432 | 2.8 | 7.2 | 280 | 0.9 | 4.5 | 15.0 |
| Comp. Ex. 5 | Comp. Ex. 1 | 0 | 324 | 2.8 | 32.7 | 130 | 18.5 | 21.2 | 58.8 |
| Comp. Ex. 6 | Comp. Ex. 2 | 0 | 318 | 2.8 | 42.9 | 100 | 14.2 | 23.8 | 60.4 |
| Comp. Ex. 7 | Comp. Ex. 3 | 0 | 444 | 2.8 | 60.6 | 120 | 13.9 | 24.8 | 56.7 |
| Comp. Ex. 8 | Comp. Ex. 4 | 16.7 | 246 | 2.8 | 5.9 | 165 | 8.8 | 25.1 | 63.9 |

### EXAMPLES 13 TO 18 AND COMPARATIVE EXAMPLES 9 TO 12

An undercoat layer was formed on a polyester base film in the same manner as in Examples 7 to 12 and Comparative Examples 5 to 8, except that the applied coating was subjected to orientation in a magnetic field of 1600 G. The characteristics of the resulting undercoat layer are shown in Table 3.

**TABLE 3**

| | Iron Oxide Powder | Ra (nm) | Gloss (%) | Dispersion Stability (Gloss Change) (%) | Light transmittance (%) | |
|---|---|---|---|---|---|---|
| | | | | | Visible Light | 900 nm |
| Example 13 | Example 1 | 4.8 | 290 | 0.4 | 1.0 | 5.3 |
| Example 14 | Example 2 | 11.9 | 178 | 5.4 | 14.6 | 38.6 |
| Example 15 | Example 3 | 5.9 | 230 | 2.5 | 3.4 | 13.5 |
| Example 16 | Example 4 | 5.1 | 180 | 8.1 | 15.8 | 35.9 |
| Example 17 | Example 5 | 4.7 | 240 | 0.2 | 4.1 | 13.5 |
| Example 18 | Example 6 | 6.8 | 310 | 0.3 | 4.1 | 13.2 |
| Compara. Example 9 | Compara. Example 1 | 33.1 | 130 | 19.0 | 21.1 | 58.2 |
| Compara. Example 10 | Compara. Example 2 | 42.8 | 100 | 14.5 | 22.7 | 60.1 |
| Compara. Example 11 | Compara. Example 3 | 58.8 | 120 | 13.8 | 24.0 | 56.4 |
| Compara. Example 12 | Compara. Example 4 | 5.1 | 170 | 7.9 | 24.3 | 62.8 |

The iron oxide powder according to the present invention has a low light transmittance, high conductivity, and excellent dispersibility and is therefore capable of forming a satisfactory undercoat layer for a coat-type magnetic recording medium having a multilayer structure. When the iron oxide powder comprising cobalt-doped iron oxide particles having a coercive force of 15 to 60 kA/m and a saturation magnetization of 0.2 to 5.0 Am²/kg is applied and oriented to form an undercoat layer or applied simultaneously with an upper magnetic layer, the particles are oriented to form an undercoat layer with a smoother surface.

## Claims

1. Iron oxide powder for an undercoat layer of a coat-type magnetic recording medium having a multilayer structure which comprises cobalt-doped iron oxide particles having an average length of 0.02 to 0.3 µm, an aspect ratio (length to width ratio) of 2 to 13, and a BET specific surface area of 40 to 100 m²/g, containing a cobalt compound in an amount of 0.2 to 10 atom% in terms of cobalt based on total iron, and having a coercive force of 15 to 60 kA/m and a saturation magnetization of 0.2 to 5.0 Am²/kg.

2. Iron oxide powder for an undercoat layer of a coat-type magnetic recording medium according to claim 1, wherein said cobalt-doped iron oxide particles are cobalt-doped α-iron oxide particles.

3. (Amended) A process of producing iron oxide powder for an undercoat layer of a coat-type magnetic recording medium having a multilayer structure, which process comprises the steps of synthesizing goethite, filtering the resulting goethite sluny, washing the filter cake with water, drying the cake, and firing the resulting goethite powder at 400 to 600°C, wherein an aqueous cobalt salt solution is added to the system of synthesizing goethite when 50 to 100% of iron (II) is oxidized to iron (III) in the step of synthesizing goethite, followed by continuation of the oxidation reaction to produce cobalt-doped iron oxide particles having an average length of 0.02 to 0.3 µm, an aspect ratio (length to width ratio) of 2 to 13, and a BET specific surface area of 40 to 100 m²/g and containing a cobalt compound in an amount of 0.2 to 10 atom% in terms of cobalt based on total iron, and having a coercive force of 15 to 60 kA/m and a saturation magnetization of 0.2 to 5.0 Am²/kg.

4. A use of cobalt-doped iron oxide particles having an average length of 0.02 to 0.3 µm, an aspect ratio (length to width ratio) of 2 to 13, and a BET specific surface area of 40 to 100 m²/g and containing a cobalt compound in an amount of 0.2 to 10 atom% in terms of cobalt based on total iron as ion oxide powder for an undercoat layer of a coat-type magnetic recording medium having a multilayer structure.

## Patentansprüche

1. Eisenoxidpulver für eine untere Beschichtungsschicht eines magnetischen Aufzeichnungsmediums vom Beschichtungstyp, das eine Vielschichtstruktur hat, welches mit Cobalt dotierte Eisenoxidpartikel umfasst, die eine durchschnittliche Länge von 0,02 bis 0,3 µm, ein Seitenverhältnis (Verhältnis Länge zu Breite) von 2 bis 13, und eine spezifische BET-Oberflächenfläche von 40 bis 100 m²/g haben, eine Cobaltverbindung in einer Menge von 0,2 bis 10 atom% in Form von Cobalt, basierend auf dem gesamten Eisen, enthalten, und eine Koerzitivkraft von 15 bis 60 kA/m und eine Sättigungsmagnetisierung von 0,2 bis 5,0 Am²/kg haben.

2. Eisenoxidpulver für eine untere Beschichtungsschicht eines magnetischen Aufzeichnungsmediums vom Beschichtungstyp gemäß Anspruch 1, wobei die mit Cobalt dotierten Eisenoxidpartikel mit Cobalt dotierte α-Eisenoxidpartikel sind.

3. Verfahren zur Herstellung von Eisenoxidpulver für eine untere Beschichtungsschicht eines magnetischen Aufzeichnungsmediums vom Beschichtungstyp, das eine Vielschichtstruktur hat, wobei das Verfahren die folgenden Schritte umfasst: Synthetisieren von Goethit, Filtrieren der resultierenden Aufschlämmung von Goethit, Waschen des Filterkuchens mit Wasser, Trocknen des Kuchens, und Brennen des resultierenden Goethit-Pulvers bei 400 bis 600°C, wobei eine wässerige Cobaltsalzlösung zu dem System zur Synthese von Goethit zugegeben wird, wenn 50 bis 100% Eisen(II) in dem Schritt des Synthetisierens von Goethit zu Eisen(III) oxidiert sind, gefolgt von einer Fortsetzung der Oxidationsreaktion, um mit Cobalt dotierte Eisenoxidpartikel herzustellen, die eine durchschnittliche Länge von 0,02 bis 0,3 µm, ein Seitenverhältnis (Verhältnis Länge zu Breite) von 2 bis 13, und eine spezifische BET-Oberflächenfläche von 40 bis 100 m²/g haben und eine Cobaltverbindung in einer Menge von 0,2 bis 10 atom% in Form von Cobalt, basierend auf dem gesamten Eisen, enthalten, und eine Koerzitivkraft von 15 bis 60 kA/m und eine Sättigungsmagnetisierung von 0,2 bis 5,0 Am²/kg haben.

4. Verwendung von mit Cobalt dotierten Eisenoxidpartikeln, die eine durchschnittliche Länge von 0,02 bis 0,3 µm, ein Seitenverhältnis (Verhältnis Länge zu Breite) von 2 bis 13, und eine spezifische BET-Oberflächenfläche von 40 bis 100 m²/g haben und eine Cobaltverbindung in einer Menge von 0,2 bis 10 atom% in Form von Cobalt, basierend auf dem gesamten Eisen, enthalten, als ein Eisenoxidpulver für eine untere Beschichtungsschicht eines magnetischen Aufzeichnungsmediums vom Beschichtungstyp, das eine Vielschichtstruktur hat.

## Revendications

1. Poudre d'oxyde de fer pour une sous-couche d'un support d'enregistrement magnétique à structure multicouche qui comprend des particules d'oxyde de fer dopées au cobalt ayant une longueur moyenne de 0,02 à 0,3 µm, un rapport d'aspect (rapport de la longueur à la largeur) de 2 à 13, et une surface spécifique BET de 40 à 100 m²/g, contenant un composé de cobalt dans une quantité de 0,2 à 10 % d'atomes en termes de cobalt sur la base du fer total, et ayant une force coercitive de 15 à 60 kA/m et une aimantation à saturation de 0,2 à 5,0 Am²/kg.

2. Poudre d'oxyde de fer pour une sous-couche d'un support d'enregistrement magnétique selon la revendication 1, dans laquelle lesdites particules d'oxyde de fer dopées au cobalt sont des particules d'oxyde de fer α dopées au cobalt.

3. Processus de production de poudre d'oxyde de fer pour une sous-couche d'un support d'enregistrement magnétique à structure multicouche, lequel processus comprend les étapes de synthétisation de goethite, de filtration de la suspension de goethite obtenue, de rinçage du gâteau de filtration avec de l'eau, de séchage du gâteau et de cuisson de la poudre de goethite obtenue entre 400 et 600 °C, dans lequel une solution aqueuse de sel de cobalt est ajoutée au système de synthétisation de la goethite lorsque 50 à 100 % de fer (II) sont oxydés en fer (III) au cours de l'étape de synthétisation de la goethite, puis la réaction d'oxydation est poursuivie afin de produire des particules d'oxyde de fer dopées au cobalt ayant une longueur moyenne de 0,02 à 0,3 µm, un rapport d'aspect (rapport de la longueur à la largeur) de 2 à 13, et une surface spécifique BET de 40 à 100 m²/g et contenant un composé de cobalt dans une quantité de 0,2 à 10 % d'atomes en termes de cobalt sur la base du fer total, et ayant une force coercitive de 15 à 60 kA/m et une aimantation à saturation de 0,2 à 5,0 Am²/kg.

4. Utilisation de particules d'oxyde de fer dopées au cobalt ayant une longueur moyenne de 0,02 à 0,3 µm, un rapport d'aspect (rapport de la longueur à la largeur) de 2 à 13, et une surface spécifique BET de 40 à 100 m²/g et contenant un composé de cobalt dans une quantité de 0,2 à 10 % d'atomes en termes de cobalt sur la base du fer total en tant que poudre d'oxyde de fer pour une sous-couche d'un support d'enregistrement magnétique à structure multicouche.
